# EUROPEAN PATENT APPLICATION

(11) **EP 3 508 067 A1**
(43) Date of publication of application: **10.07.2019**
(21) Application number: 18150497.8
(22) Date of filing: 05.01.2018
(51) Int. Cl.: A23J 3/14, A23J 3/16, A23J 3/22, A23J 3/26, A23P 30/20

(54) **A METHOD FOR PRODUCTION OF VEGETABLE MEAT SUBSTITUTE WITH IMPROVED TEXTURE**

(71) Applicant: Dragsbaek A/S, DK-7700 Thisted (DK)
(72) Inventor: Christensen, Thue, 7700 Thisted (DK); Vestergaard, Kasper, 7700 Thisted (DK); Søndergaard, Mikkel, 8920 Randers NV (DK)
(74) Representative: AWA Denmark A/S

(57) **Abstract**

The present invention relates to a method for producing a vegetable meat substitute having improved texture and appearance. The invention also relates to vegetable meat obtained by the method. The vegetable meat substitute provided by the method of the invention provides also has an improved shape stability.

## Description

The present invention relates to a method for producing a vegetable meat substitute having improved texture and appearance. The invention also relates to a vegetable meat substitute obtained by the method said vegetable meat substitute has an improved shape stability, texture and taste.

### Background of the invention

The consumption of meat is increasing and will continue to increase over the coming years. According to the Food and Agriculture Organization of the United Nations (FAO) the consumption of veal and beef will increase from 58.26 million tons in year 2000 to 76.01 million tons in year 2026.

This is the result of an increasing world population which is placing increasing demands on the supply of foods, especially those which are a source of protein. It is commonly known that the environmental impact from production of meat such as for example veal and beef is much higher than for plant based meat replacements products.

Traditionally, meat is often considered as the primary ingredient in a dish and is consequently the ingredient which is selected first when preparing for a meal, whereas the garniture is selected based on the choice of meat. This trend has e.g. been shown in studies where it is seen that supermarket consumers initially look in the refrigerated counter with meat to get inspiration for their dinner. After selecting the source of protein (meat) they pick the remaining items for the meal.

The fact that many see meat as the primary ingredient in a meal is probably a consequence of tradition. However, the trend also indicates that weekly grocery shopping is unplanned and that decisions in supermarkets are made spontaneous and based on habits.

One way to reduce the consumption of meat is to replace it with alternative sources of proteins. However, many meat replacement products have different textures and tastes than regular meat and often have to be prepared in different ways. As a consequence, the consumer finds these products difficult to use since they cannot prepare traditional dishes based on regular meat. While the consumers might have a desire to select a more sustainable product, the desire to use extensive time on preparation and preparing the food is not there, and the average consumers will therefore in a typical weekday pick products from the supermarket which they are familiar with and know how to use.

One of the most popular types of meat from the supermarket is minced meat, which is a main ingredient in several popular dishes. It is a diverse product which can be prepared and used in very different ways. The mince can e.g. be formed into hamburgers or meat balls, or the raw mince can be fried on a pan to make a meat sauce.

During the recent years the number of people who follow a vegan or vegetarian diet has increased, but is still a minority of the population in western countries. The average consumer might however for sustainable or health reasons choose a vegan or vegetarian meal e.g. once a week if a meat substitute product resembling meat products, which they are familiar with, were available. If a vegetable meat substitute could be prepared in a similar way and have a taste and textures resembling regular meat products it would not require any additional time to prepare a vegetarian meal, and the ordinary consumer would be more likely to buy a vegetarian product.

Attempts are made to provide products that mimic meat, for example, EP2689670 relates to such a so-called pseudomeat product and a method for producing the same in which a raw material of hydrated vegetable proteins is heated. Before the heating step a number of different fractions of vegetable protein and starch are mixed to provide a composition having protein sources of different lengths.

However, there is still a need for improved vegetable meat replacement product, which resembles the appearance and feel as a regular meat product such as minced meat, both before and after being cooked and which can be used in essentially the same way of cooking.

### Description of the invention

With this background it is an object of the present invention to provide an improved method for producing a vegetable meat substitute which resembles the appearance of minced meat, has the same texture and mouth-feel and which can be shaped and used in essentially the same way as minced meat.

Accordingly, in a first aspect is provided a method for producing a vegetable meat substitute said method comprising the consecutive steps of:
a) mixing at least one colouring agent with water to obtain a liquid colour blend;
b) providing a solid extruded plant protein material;
c) mixing the liquid colour blend of step a) and the solid extruded protein material of step b);
d) hydrating the solid extruded plant protein with the liquid colour blend for a period of time sufficient for the solid extruded plant protein to absorb the liquid to obtain a hydrated coloured protein;
e) optionally adding at least a vegetable fat to the hydrated coloured protein, said vegetable fat is solid at room temperature; and
f) performing the steps a) to e) at ambient temperatures or lower.

By adding colour agent to the water for hydration, it appeared that the colour intensity of the final meat substitute is more intense and resembles the colour of meat and in particular of minced meat. Also, the consecutive order by which the hydration of extruded plant protein and the colouring blend takes place before other ingredients also results in an improved texture similar to that of regular minced meat.

The at least one colouring agent and water are mixed together and mixed until a liquid colour blend with a uniform colour is obtained.

Typically, the blend consists of at least 95 % (w/w) water, preferably at least 97% (w/w) water, more preferred at least 98 % (w/w) water and balance colouring agents.

It is an important element in the consumer's perception of food that the foodstuff has an attractive and appealing appearance. With regards to beef products, exposure to oxygen makes the meat "bloom" and turn from original purple colour (deoxygenated state) into a cherry-red colour in an oxygenated state. Oxymyoglobin is the pigment responsible for this pleasingly cherry-red colour. It is a colour similar to this pleasingly cherry-red colour of oxygenated meat which is desired for the vegetable meat replacement. This fresh meat like appearance is achieved when mixing the intense colour, which mimics the colour of fresh oxygenated meat, with the extruded plant protein material.

The colour of the liquid colour blend obtained in step a) may resemble the colour of fresh oxygenated meat. Depending on the type of extruded plant protein and concentration of colouring agents and other additives and ingredients in the mixture, the colour of the liquid colour blend obtained in step a) could also have a colour which is somewhat off from resembling a meat colour, but which gives a colour which mimics the colour of fresh oxygenated meat when the vegetable meat product is final processed.

The colouring agents may be any type of colouring agent such as natural colours, fruit and vegetable concentrates and juices but may also be artificial colours. Food additives such as natural aromas and food concentrates known by a person skilled in the art to add both taste and/or colour may also be added as a colouring agent. Examples of colours that are usable according the invention can be selected from the group but is not limited to: reddish colours such as betanin from beetroot, lycopene from tomatoes, extract from paprika and brown colours such as caramel colouring or malt extract. Natural colours and or aromas usable in the invention are available from suppliers such as Dohler, Firmenich, Silesia and Symrise and Chr. Hansen A/S.

The solid extruded plant protein material may be any extruded plant protein material, which when processed, can resemble the texture of regular meat with a similar "chew". The solid extruded plant protein may be a single type of plant protein or may comprise several types of plant protein. Furthermore, the solid extruded plant protein may comprise different sized extruded plant protein. If the solid extruded plant protein comprises several types or sizes of extruded plant protein the method may include a step of mixing the different types or sizes of extruded plant protein, prior to the mixing with the liquid colour blend and the solid extruded plant protein.

The step of mixing the liquid colour blend and the solid extruded plant protein may be performed in any type of mixer suitable for mixing a solid compound with a liquid. This might be a tumbler, such as for example a barrel tumbler, which is able to massage or tumble the solid extruded plant material with the liquid colour blend.

By mixing the liquid colour blend with the solid extruded protein material it is ensured that the colouring agent soaks into the extruded protein material in a homogeneous way and provides a uniform and consistent colouring of the protein. By hydrating the solid extruded plant material in a liquid colour blend the hydrated protein obtains a more intense and realistic colour which resembles the cherry-red colour of regular fresh meat, compared to a protein which is coloured subsequent to hydration in a colourless liquid. In the method according to the invention the colour soaks deeper into the protein and results in a hydrated protein which has a more homogeneous colour throughout the entire cross section of the coloured hydrated protein. This ensures that the coloured hydrated protein has the same colour and appearance as meat even if the protein is cut in smaller pieces or minced. The hydration step has a duration sufficient for the solid extruded plant protein to absorb all the free liquid. It is also important that no added carbohydrate compounds or gluten are present during the hydration step as these compounds will compete for the water uptake. If not hydrated properly the extruded plant protein will not result in an improve texture and provide a good "bite" to the final product.

When an adequate amount of liquid colour blend is added to the solid extruded plant material, the coloured hydrated protein will have a suitable texture when all the liquid has soaked into the protein, i.e. when the two phases have become a single phase.

In a particular embodiment the ratio of water: vegetable protein is in the range of 6:1 to 1:3 (w/w), more preferred 5:1 to 1:1 (w/w), such as 4:1 (w/w).

The step of adding a vegetable fat provides the vegetable meat replacement with the desired fat content which can be varied in order to resemble the fat content found in regular minced meat products. The vegetable fat gives the final product a variety of advantageous characteristics. Firstly, it gives a nice structure to the product. This is ensured by using a vegetable fat which is solid at room temperature. This is essential because the vegetable meat replacement product therefore has the same fat structure when it is stored at refrigerated conditions as it is processed by ambient temperatures in e.g. a kitchen. This helps to ensure that the vegetable meat replacement has the same behaviour as minced meat and can be processed by the consumer in a similar manor, i.e. that it can be shaped as a hamburger, meat balls or prepared as mince.

Secondly, a suitable fat content aids an even formation of a delicate rose crust upon frying on the surface of the vegetable meat replacement product. Thirdly, it also gives the vegetable meat replacement product a more juice and delicate mouth-feel when it e.g. is prepared as a hamburger. Depending on the type of fat added to the mixture, the fat may also add a desired taste.

In an embodiment the fat is added in two steps where in the first step, the fat is liquefied and added for improved distribution in the mince whereas in the second step the vegetable fat is added in its solid form. The addition of a solid vegetable fat compound gives the final vegetable meat replacement product the appearance of mince, since the fat is cumulated in small white fat lumps. This appearance of the vegetable fat can only be achieved by conducting the process at ambient or lower temperature. Thus, at these conditions the vegetable fat is in a solid state, without being too hard.

If the process was conducted at temperatures higher than the melting point of the vegetable fat, the vegetable fat would melt and distribute evenly in the mixture and therefore not result in a minced vegetable meat substitute product appearing as having fat flecks or chunks within.

Additionally, by operating the process at ambient temperature the vegetable meat product obtains structural properties from the solid fat. It becomes a firm but formable mass. If the process was conducted at elevated temperatures above the melting point of the vegetable fat the mass would become like mash and therefore too soft to shape like a mince likely due to denaturing of heat labile compounds. Processing at ambient or preferably at lower temperatures further aids in inhibiting undesired microbial growth.

In a preferred embodiment of the method according to the invention a stabilizer is added to the hydrated coloured protein. By the term stabilizer is meant a form or shape stabilizer. The stabilizer should be added to the mixture after hydration of the protein since it is essential that the protein absorbs an appropriate amount of water before other water absorbing compounds are added. The stabilizer must be either a form-stable or form-reversible compound which can retain the desired shape/consistence during handling and preparation of the mince at elevated temperatures. For this reason, the inventors have found that thermos-labile protein-based stabilizers are unsuitable for this purpose since denaturation of proteins occurs at elevated temperatures, which can be expected during preparation of the vegetable meat substitute. In a preferred embodiment the stabilizer added to the hydrated coloured protein is a carbohydrate-based stabilizer, most preferably a polysaccharide-based stabilizer. Preferably the one or more stabilizers are selected from the group consisting of cellulose, cellulose ethers, such as methylcellulose, hydroxypropyl methylcellulose, pectins, alginate, carrageenan, Agar, Gum Arabic, starch and mixtures thereof, but in theory any compound known to a person skilled in art to give similar effects could be selected. A commercially available stabilizer usable according to the invention is available from e.g. Parchem under the tradename Methylcellulose A4M or Dow under the tradename Methocel ®

The stabilizer is added to the mixture in such an amount that the mixture is form-stable, meaning that it can be shaped and keep its form, but that the given shape is not definite, and can be reshaped later. The amount of stabilizer added to the mixture depends on the type of stabilizer, but is typically in the range of 0.5 to 3.0 weight percent of the final mixture, preferably in the range of 1.0 to 2.0 weight percent of the final mixture, more preferred in the range of 1.25 to 1.75 weight percent of the final mixture, more preferably in the range of 1.4 to 1.6 weight percent of the final mixture, most preferably in the area of 1.5 weight percent of the final mixture. If the amount of stabilizer is too high the mince will appear too rubbery and tough if the amount is too low e.g. 1 % (w/w), which was tested, there is not achieved a satisfactory gelling of the carbohydrate and hence the mince will lose its shape and run out. So in applications where the substitute is intended for use as mince, the stabilizer is preferably added in an amount of 1.4 to 2 weight percent of the final mixture.

In a particular embodiment of the method according to the invention gluten is added to the hydrated coloured protein. Gluten is added after the hydration step and after addition of the stabilizer preferably before adding the vegetable fat. The source of gluten could be any type and combination of gluten proteins such as e.g. wheat gluten. Gluten is added to provide the vegetable meat replacement with viscoelastic properties. Gluten provides the vegetable meat replacement with a certain toughness/resistance which provides the vegetable meat replacement with a similar chew as regular minced meat. Without being bound by any theory it is believed by the inventors that the added gluten reacts with the water/moist in the mixture and forms intermolecular bonds which forms a three-dimensional lattice, similar to the formation in gluten-containing bread. This structure entraps the stabilizer compound in the mixture and thereby binds the mixture together. The effect of this is that the vegetable mince replacement has the same appearance and feel as regular minced meat. In order to obtain the most realistic structure and appearance similar to the one of regular mince, it is preferred that the gluten is added to the mixture after the stabilizer. By following this sequence, the stabilizer will hydrate properly before the gluten is added and the mixture will obtain an excellent appearance and texture.

Gluten is added in an amount of 1 to 6 weight percent of the final mixture, preferably 2 to 5 weight percent of the final mixture, more preferred 3 to 4 weight percent of the final mixture. Gluten is readily available to the skilled person.

In a preferred embodiment of the method according to the invention the process further comprises the step of mincing the hydrated coloured protein mass in order to obtain a vegetable meat mince. The mincing step is performed in regular manner known to a person skilled in the art.

A perforated disc used for this step has a perforation diameter small enough to reduce the size of the protein, but large enough to maintain texture in the mince. Typically, the perforation disc has perforation diameters in the area of 2 to 6 mm, preferably 2.5 to 4.5 mm, most preferred 3.5 mm. After extrusion through the die the mince is placed in a container and is sealed, preferably nitrogen is added to the container before being sealed, to maintain a fresh look of the meat substitute. In this way the final product presented to the consumer resembles minced meat from animal.

The appearance of the finished vegetable meat substitute is a superior product compared to prior art products since it has an appetizing colour similar to that of regular mince, with an even colour throughout the whole mince.

The solid extruded plant protein is preferably an extruded wheat (substantially without gluten), pea, oat or soy protein. Commercial products available include Textured Soy Protein products available from FOODCHEM, Bremil or Danisco.

Depending on season, location or e.g. preference of local consumers it may be beneficial to select one to or the other since each of them might differ in price, availability, taste and texture. A presently preferred solid extruded plant protein is soy protein.

The content of extruded plant protein (before hydration) in the final product is typically around 10 to 35 % (w/w), preferably in the range of 15 to 25 % (w/w), such as around 20 % (w/w).

The content of hydrated soy protein in the final product is typically around 8 to 25 % (w/w), preferably around 12 to 20 % (w/w), more preferred around 16 to 18 % (w/w).

In a preferred embodiment of the method according to the invention, the extruded plant protein material provided in step b) comprises at least two types of extruded plant protein. The word "type" may refer to size, texture, shape, protein species, method of manufacture, content of protein, content of additives, water content or any combination thereof. The extruded plant protein may be a product comprising several ingredients such as a combination of plant protein and smaller amounts of carbohydrate. The at least two types of extruded plant protein may as an example be two different granulate sizes, which gives an irregular grain size of the final minced vegetable meat substitute and thereby gives it a texture and look closer to the one as regular mince. The at least two types of extruded plant protein could also be two kinds of extruded plant protein origin from different plants, such as e.g. a combination of pea and soy protein. The extruded plant protein material provided in step b) could therefore comprises at least two types of extruded plant protein different in size, texture, shape, species or nutrient content or any combination thereof.

The plant protein provided in step b) may also comprise a structured plant protein material. The use of a structured plant protein material together with an extruded plant protein gives the mixture an irregular grain size and texture which gives a final texture of the vegetable meat substitute closer to the one of regular mince.

Besides having a good appearance when in a raw mince state, it is also important for the consumer experience that the prepared vegetable meat substitute has a good appearance, taste and mouth-feel in a cooked/prepare d state.

The juiciness of the prepared meat substitute is an important factor here. The juiciness of the meat substitute is dependent on the water bound in the hydrated protein, but also by the amount of fat in the product. It may therefore be beneficial to have fat uniformly distributed in the mince in order to obtain a delicate and juicy mouth-feel. In a preferred embodiment of the method according to the invention, vegetable fat is added in two separate steps. In a first step, which preferably occurs before step e), a first vegetable fat or a vegetable oil is added. This first vegetable fat or vegetable oil is a liquid state or a soft solid state which makes it easy to distribute in the coloured hydrated protein mixture. The first vegetable fat or vegetable oil may however also be in a solid state, which only requires more work in order to distribute the fat in the mixture. It may be any type of vegetable fat or vegetable oil such as but not limited to rapeseed oil, sunflower oil, olive oil, palm oil, sesame oil, coconut oil, coconut fat or any combination thereof. The amount of fat in the final product is in the range of 4 to 15 % (w/w), preferably 7 to 12 % (w/w). The amount of liquid and solid fat added is typically the same. Hence 2 to 7.5 % (w/w), such as 3 to 5 % (w/w) may be added as liquid resp. solid fat.

The vegetable fat or vegetable oil may be selected solely for the purpose of adding extra fat to the final vegetable mince product and give a fattier structure and delicate mouth-feel, but it can also be selected in order to contribute to a delicate taste. It is also contemplated that this first vegetable fat may be omitted in case a low fat product is desired.

In a preferred embodiment the method additionally comprises the step of adding a flavouring agent. The one or more flavouring agent(s) which can be added at any point after the hydration step d) gives the final meat substitute product the basic tastes like meat, especially savouriness or umami is an important taste in this context. Flavouring agents which gives the final vegetable meat replacement product a resemblance to meat can be used. It is however more important to use flavouring agents which gives the final vegetable meat replacement product a delicate taste which is suitable with tastes in regular meat dishes. In a preferred embodiment of the method according to the invention at least the one or more flavouring agent(s) is selected from the group comprising: Tomato, almond and mushrooms, such as boletus edulis. Typically, a mix of flavourings are added both to provide flavour and texture to the final product.

In a further embodiment almond paste is added as a flavouring agent to the mass. It was found that in particular when the extruded plant protein material is from soy bean, almond paste is efficient in masking the soy bean taste.

Flavourings are added in an amount of 1.5 to 8 % (w/w) of the final product, such as 2 to 5 % (w/w) of the final product, preferably around 3 to 4% (w/w) of the final product.

The hydrating step d) may be performed under vacuum in this way the speed with which the protein is fully hydrated will be increased and hence the processing time will be reduced. The hydration may take as little as 8 to 20 minutes such as 1 to 15 minutes when under slight vacuum. In addition, the vacuum will also slightly lower the temperature which is an advantage according to the invention. Typically, a slight vacuum is applied such as, from 0.3-1.0 bar, preferably from 0.3-0.6 bar. Preferably the vacuum is applied with a pulsating vacuum pump to avoid congestion.

The method is carried out at temperatures below 25°C, preferably below 21°C. It was found that with no heating during the manufacture a better texture and taste of the final products was obtained.

It was also found that the hydration was more efficient at lower temperatures, which is believed to be one reason for the improved texture. Hence, in yet another embodiment cooling means are provided to ensure that the entire process line operates at temperatures below 8°C, preferably below 5°C. Further lowering the temperature is believed to further conserve the structure of the components despite the possible need for more pumping power due to the higher viscosity. However, it is believed that the quality of the final product when operating the process at around 4 °C outweigh the extra costs associated herewith.

In its broadest sense vegetable fat is added after the hydration process. In preferred embodiments in which further ingredients are added. A number of ingredients are preferably added before adding the vegetable fat in solid form. Thus, water, stabilizer, flavourings and further colourants are preferably mixed first, subsequently gluten and optional further vegetable protein extrudate is added then followed by oil and/or fat in liquid or semiliquid form. To the mix is then added the hydrated coloured vegetable protein and finally the solid fat is added. The mixing in this step typically takes place in mixers, which can operate at speeds in the range of 200 to 2000 rpm, such as 300 to 1800 rpm, preferably 400 to 1500 rpm, such as 400 rpm or 1500 rpm, such as equipment available from K+G Wetter.

The mixture may subsequent be mixed and/or minced in a second mixer or mincer which may operate at similar or lower speeds. The mix may be mixed and transported in a mincer or an extruder with mincing means, to facilitate transport and mixing at the same time, such as equipment available from Frey.

The speed combined with size should be such that a proper mixing of ingredients is ensured. If the speed is too high, an inhomogeneous mass will be obtained. In theory the speed may be lower than the preferred ranges but that would be at the expense of produced volume.

It is further contemplated that additional colourings are added after the hydration step and before adding the vegetable fat.

Further ingredients such as salt, further protein extrudate, colours, spices, oil etc. may be added.

In the final mix of the product further water may also be added. Hence in the end product the total content of water including water for the hydration is between 45 and 65 % (w/w), preferably 50 to 60 % (w/w).

The invention also relates to a vegetable meat substitute which mimics the appearance of minced meat which is produced according to the present invention.

It is also contemplated that the meat substitute mass may be compressed to mimic a whole piece of meat.

However, in preferred embodiments the meat is ground to provide a minced meat product.

The invention will now be illustrated with reference to the following non limiting example.

### Examples

### Example 1

A mixture of water, and a red colour mix as detailed below, were mixed at room temperature until a homogenous colour could be observed.

| **Liquid colour blend -step a) to c) of the method** | | |
|---|---|---|
| Ingredient | Amount (w/w %) | Amount in batch (kg) |
| Water | 98.051 | 11.569 |
| Malted Barley Extract | 0.487 | 0.057 |
| Beetroot colour | 1.056 | 0.125 |
| Natural Flavour | 0.406 | 0.048 |
| **Total** | **100** | **11.7987** |

In the next step the blend obtained in step a) was mixed with soy protein as detailed below. The mixture was allowed to hydrate in one batch with pulsating vacuum at 0.3-0.6 bar. The mixture was allowed to hydrate in a tumbler of the type Rühle GmbH MPR 150 until no more water was visible. Under the described conditions the time was about 10 minutes.

| **Hydration of extruded soy protein - step d)** | | |
|---|---|---|
| Ingredient | Amount (w/w %) | Amount in batch (kg) |
| Textured soy protein concentrate | 22 | 3.874 |
| Structured vegetable protein | 11 | 1.937 |
| Colour blend of step a) | 67 | 11.799 |
| **Total** | **100** | **17.610** |

After step d) a flavour and colour mix was prepared under agitation

| **Preparation of flavouring agent mixture after step d) and before step e)** | | | | |
|---|---|---|---|---|
| Ingredient | Amount in final mince (w/w %) | Amount in batch (kg) | Speed (rpm) | Rounds |
| Agitation | | | 1 | 10 |
| Water | 17.37 | 5.211 | | |
| Tomato Powder | 1 | 0.300 | | |
| Roasted Blanch almond paste | 2 | 0.600 | | |
| Carl Johan, Boletus edulis | 0.5 | 0.150 | | |
| Beetroot colour | 0.6 | 0.180 | | |
| Natural Flavour | 0.23 | 0.069 | | |
| Natural Flavour | 0.5 | 0.150 | | |

Finally, in step e) of the method the flavour and colour mix was ground with the following ingredients. The mixing took place in a K+G Wetter Cutmix CM 120 T2M-R at the indicated speed, and after each addition of ingredients a mincing step was included. In this embodiment all ingredients but solid coconut fat was mixed before adding the hydrated soy protein. But other sequences may be contemplated in the framework of the method of the invention.

| | | | | |
|---|---|---|---|---|
| Continued. | | | | |
| Mincing | | | 400/1500 | 20 |
| Methyl Cellulose | 1.5 | 0.450 | | |
| Mincing | | | 400/1500 | 20 |
| Soy protein isolate | 2 | 0.600 | | |
| Wheat gluten | 4 | 1.200 | | |
| Mincing | | | 400/1500 | 5 |
| Coconut fat, melted | 4.5 | 1.350 | | |
| Mincing | | | 400/1500 | 5 |
| Salt | 0.8 | 0.240 | | |
| Fermented dextrose | 1.8 | 0.540 | | |
| Mincing | | | 400 | 10 |
| Hydrated Soy | 58.7 | 17.610 | | |
| Mincing | | | 400 | 10 |
| Coconut fat, solid | 4.5 | 1.350 | | |
| | 100 | 30.000 | | |

After thorough mixing the final mix was minced again using a Frey Machinenbau GmbH, Vakuumfüllmaschine F-Line F193 and extruded through a perforated disc having apertures with a diameter of 3.5 mm to resemble the presentation of ordinary minced meat.

The final product had a good shape stability when formed into hamburgers, and meat balls as well as in chili "sin" carne. After preparation the vegetable meat substitute had a pleasant taste resembling that of ground beef and had a texture identical thereto.

### Example 2

Vegetable meat substitute products are produced using the steps as outlined in example 1. The composition of the final vegetable meat substitute product is:

| **Final composition of a vegetable meat substitute according to example 2.** | |
|---|---|
| Ingredients | (w/w)% |
| Water | 56.50 |
| Soy protein isolate | 2.00 |
| Structured vegetable protein | 6.50 |
| Textured soy protein concentrate | 13.00 |
| Coconut oil | 8.00 |
| Methyl cellulose | 1.70 |

| | |
|---|---|
| Wheat GLUTEN | 4.05 |
| Fermented dextrose | 1.80 |
| Salt | 0.80 |
| Malted barley extract | 0.20 |
| Beetroot colour | 1.00 |
| Natural flavour | 0.95 |
| Tomato powder | 1.00 |
| Roasted blanched almond paste | 2.00 |
| Carl Johan mushroom | 0.50 |
| Total | 100.00 |

The resulting vegetable meat substitute has excellent resemblance to meat, with both a texture and taste like regular meat, when served as chopped steak.

## Claims

1. A method for producing a vegetable meat substitute said, method comprising the consecutive steps of:
a) mixing at least one colouring agent with water, to obtain a liquid colour blend;
b) providing a solid extruded plant protein material;
c) mixing the liquid colour blend of step a) and the solid extruded protein material of step b);
d) hydrating the solid extruded plant protein and liquid colour blend mixture for a period of time sufficient for the solid extruded plant protein to absorb the liquid to, obtain a hydrated coloured protein;
e) optionally adding at least a vegetable fat to the hydrated coloured protein, said vegetable fat is solid at room temperature; and
f) performing the steps a) to e) at ambient temperatures or lower.

2. A method according to claim 1, wherein the method comprises:
e) adding at least a vegetable fat to the hydrated coloured protein, said vegetable fat is solid at room temperature;

3. A method according to claim 1 or 2, wherein step e) takes place in a mincer or grinder.

4. A method according to any one of the previous claims, wherein a stabilizer is added to the hydrated coloured protein at any point after step d), said stabilizer being a carbohydrate, such as a poly- and/or oligosaccharide, preferably the stabilizer is added before step e).

5. A method according to claim 4, wherein the stabilizer is selected from the group consisting of cellulose, methylcellulose, pectins, alginin, carrageenan, Agar, Gum Arabic, starch and/or mixtures thereof.

6. A method according to any one of the previous claims, wherein gluten is added to the hydrated coloured protein at any point after step d), preferably before step e).

7. A method according to any one of the previous claims, wherein the solid extruded plant protein originates from wheat, pea, oat or soy, with the proviso that the wheat protein is not gluten.

8. A method according to any one of the previous claims, wherein the extruded plant protein material provided in step b) comprises at least two types of extruded plant proteins each having different texture, size or shape.

9. A method according to any of the previous claims wherein the plant protein material provided in step b) comprises a mixture of an extruded plant protein and a structured plant protein.

10. A method according to any one of the previous claims, wherein the addition of vegetable fat of step e) is performed in two separate steps.

11. A method according to claim 10, wherein in a first step the vegetable fat is added in liquid form and in a second step the vegetable fat is added in its solid form.

12. A method according to any one of the previous claims, wherein the vegetable fat is coconut fat.

13. A method according to any one of the previous claims, wherein the step of hydrating the solid extruded plant protein is performed under vacuum.

14. A method according to any one of the previous claims, wherein the method additionally comprises the step of adding at least one flavouring agent at any point after step d), preferably before step e).

15. A method according to claim 14, wherein the at least one flavouring agent is selected from one or more of the group consisting of tomato, almond paste and mushrooms, such as boletus edulis.

16. A method according to any one of the previous claims, wherein the method is carried out at temperatures below 25°C, preferably below 21°C.

17. A method according to any one of the previous claims, wherein the method is carried out at temperatures below 8°C, preferably below 5°C, such as 2°C to 4°C.

18. A method according to any one of the previous claims wherein a flavouring agent, a stabilizer, gluten and vegetable fat in its liquid form are added and wherein said ingredients are mixed before being added to the hydrated coloured soy protein between steps d) and e).

19. A method according to any one of the previous claims, wherein the process further comprises one of the steps of:
g1) mincing the hydrated coloured protein mass in order to obtain a vegetable meat substitute mince; or
g2) compressing the hydrated coloured protein mass in order to obtain a whole piece of vegetable meat substitute;
and
packing said vegetable meat substitute to provide a product ready for sale.

20. A vegetable meat substitute which mimics the appearance of minced meat or whole meat produced by any one of the previous claims.
